# EUROPÄISCHE PATENTSCHRIFT

(11) **EP 1 010 141 B1**
(45) Veröffentlichungstag und Bekanntmachung des Hinweises auf die Patenterteilung: **16.01.2002**
(21) Anmeldenummer: 98951256.1
(22) Anmeldetag: 26.08.1998
(51) Int. Cl.: G06T 9/00

(54) **VORRICHTUNG ZUR ANSICHTSADAPTIERBAREN SYNTHESE VON OBJEKTBILDERN**
DEVICE FOR THE VIEW-ADAPTABLE SYNTHESIS OF OBJECT IMAGES
DISPOSITIF POUR LA SYNTHESE ADAPTABLE A UNE VUE D'IMAGES D'OBJET

(30) Priorität: 26.08.1997 DE 19736992
(43) Veröffentlichungstag der Anmeldung: 21.06.2000
(73) Patentinhaber: Heinrich-Hertz-Institut für Nachrichtentechnik Berlin GmbH, 10587 Berlin (DE)
(72) Erfinder: OHM, Jens-Rainer, D-12205 Berlin (DE); MÜLLER, Karsten, D-12437 Berlin (DE)
(74) Vertreter: Rudolph, Margit
(86) Internationale Anmeldenummer: DE9802579
(87) Internationale Veröffentlichungsnummer: WO9910841

(56) Entgegenhaltungen:
- GB-A- 2 285 359
- US-A- 4 625 290
- US-A- 4 723 159
- OHM J -R ET AL: "An object-based system for stereoscopic videoconferencing with viewpoint adaptation" DIGITAL COMPRESSION TECHNOLOGIES AND SYSTEMS FOR VIDEO COMMUNICATIONS, BERLIN, GERMANY, 7-9 OCT. 1996, Bd. 2952, Seiten 29-40, XP002089116 ISSN 0277-786X, Proceedings of the SPIE - The International Society for Optical Engineering, 1996, SPIE-Int. Soc. Opt. Eng, USA

## Beschreibung

Die Erfindung betrifft eine Vorrichtung zur ansichtsadaptierbaren Synthese von Objektbildern mit einer Bildaufnahmeeinrichtung zum Aufnehmen eines Objektes aus wenigstens zwei Aufnahmeansichten und zur Darstellung in Objektaufnahmebildern, mit einer Bilddatenverarbeitungseinrichtung, mit der die Objektaufnahmebilder zu Objektbilddaten miteinander verknüpfbar sind, und mit einer Synthesebildgeneriereinrichtung, mit der aus den Objektbilddaten Objektsynthesebilder des Objektes aus von den Aufnahmeansichten verschiedenen Syntheseansichten erzeugbar sind.

Eine derartige Vorrichtung ist aus dem Artikel "Multiviewpoint Video Coding with MPEG-2 Compatibility" von B.L. Tseng und D. Anastassiou, erschienen in der Fachzeitschrift IEEE TRANSACTIONS ON CIRCUITS AND SYSTEMS FOR VIDEO TECHNOLOGY, Band 6, Nr. 4, August 1996, bekannt. Bei der gattungsgemäßen Vorrichtung ist eine Bildaufnahmeeinrichtung vorgesehen, mit der über eine Anzahl von Bildaufnahmeeinheiten, die unter verschiedenen Aufnahmeansichten angeordnet sind, ein Objekt aufnehmbar und in Objektaufnahmebildern darstellbar ist. Weiterhin ist eine Bilddatenverarbeitungseinrichtung vorgesehen, mit der ein ausgewähltes Objektaufnahmebild und Disparitäten zu anderen Objektaufnahmebildern zu Objektbilddaten verknüpfbar sind. Mittels einer Synthesebildgeneriereinrichtung sind aus den Objektbilddaten Objektsynthesebilder aus von den Aufnahmeansichten verschiedenen Syntheseansichten unter Verknüpfung mit einem anderen Objektaufnahmebild in Abhängigkeit von der gewählten Syntheseansicht erzeugbar. Dabei werden mit der sogenannten "wire-frame"-Methode, einem dreidimansionalen Modellierungsverfahren, zwischen den beiden verwendeten Objektaufnahmebildern Prädiktionsfehler berechnet, die beim Generieren der Synthesebilder berücksichtigt werden.

Zwar sind mit der vorbekannten Vorrichtung unter verschiedenen Syntheseansichten Synthesebilder mit einem räumlichen Eindruck des Objektes generierbar, allerdings ist hierzu eine sehr große Datenmenge zu verarbeiten, die beispielsweise bei Übermittlung von bewegten Bildern, wie beispielsweise bei Videokonferenzen erforderlich, zu unerwünschten Verzögerungen oder erzwungenen Bewegungssprüngen führen können.

Der Erfindung liegt die Aufgabe zugrunde, eine Vorrichtung der eingangs genannten Art anzugeben, bei der mit einer verhältnismäßig geringen Menge von Objektbilddaten Synthesebilder unter zu Aufnahmeansichten verschiedenen Syntheseansichten generierbar sind, so daß die Objektbilddaten beispielsweise sehr schnell übertragbar oder mit einem geringen Speicherbedarf abspeicherbar sind.

Diese Aufgabe wird bei einer Vorrichtung der eingangs genannten Art erfindungsgemäß dadurch gelöst, daß die Bilddatenverarbeitungseinrichtung ein Trennlinienbestimmungsglied aufweist, mit dem in jedem Objektaufnahmebild wenigstens eine Trennlinie bestimmbar ist, die jedes Objektaufnahmebild in jeweils einem einer Aufnahmeansicht zugeordneten Erfassungsbereich entsprechende Aufnahmebildsegmente mit höherer und niedrigerer Ortsauflösung unterteilt, daß die Bilddatenverarbeitungseinrichtung über eine Aufnahmebildsegmentmischeinheit verfügt, mit der wenigstens Aufnahmebildsegmente höherer Ortsauflösung entlang der oder jeder Trennlinie zu einem Gesamtbild der Objektbilddaten verknüpfbar sind, und daß die Synthesebildgeneriereinrichtung mit einer Syntheseeinheit ausgestattet ist, mit der aus dem Gesamtbild und der Lage der oder jeder Trennlinie verschiedenen Syntheseansichten zugeordnete Synthesebilder generierbar sind.

Dadurch, daß die Objektaufnahmebilder entlang von wenigstens einer Trennlinie in Erfassungsbereichen der Bildaufnahmeeinrichtung zugeordneten Aufnahmebildsegmenten aufteilbar und wenigstens Aufnahmebildsegmente mit höherer Ortsauflösung zu einem Gesamtbild verknüpfbar sind, werden zur Generierung der Synthesebilder lediglich diejenigen Bilddaten benötigt, die den größten Informationsgehalt haben. Dadurch ist eine erhebliche Reduktion der Menge der Objektbilddaten erzielt.

In einer Weiterbildung ist vorgesehen, mit der Aufnahmebildsegmentmischeinheit die Aufnahmebildsegmente mit höherer Ortsauflösung in einer der Anordnung der Aufnahmeansichten zugeordneten gleichen Anordnung zu einem Primärbild als Bestandteil des Gesamtbildes zu verknüpfen. In einer diesbezüglichen Weiterbildung sind mittels der Aufnahmebildsegmentmischeinheit die Aufnahmebildsegmente mit einer geringeren Ortsauflösung in einer zu der Anordnung von zugeordneten Aufnahmeansichten komplementären Anordnung zu einem Sekundärbild verknüpfbar, das mit dem Primärbild zu dem Gesamtbild überlagerbar ist. Dabei ist es zweckmäßig, bei der Überlagerung das Primärbild im Bereich der oder jeder Trennlinie geringer als in weiter von der dieser Trennlinie entfernten Bereichen und das Sekundärbild in Bereichen nahe der Trennlinie stärker als in weiter von der Trennlinie entfernten Bereichen zu gewichten.

Durch die vorzugsweise gewichtete Überlagerung des Primärbildes und des Sekundärbildes zu dem zu übertragenden oder abzuspeichernden Gesamtbild mit einer gegenüber der Summe der Objektaufnahmebilder geringeren Datenmenge sind beispielsweise durch verschiedene Beleuchtungsverhältnisse hervorgerufene Artefakte entlang der oder jeder Trennlinie weitestgehend reduziert, so daß bei den generierten Synthesebildern ein ungestörter Bildeindruck entsteht.

Um realitätsnahe Synthesebilder zu erhalten, ist es zweckmäßig, daß die Bilddatenverarbeitungseinrichtung über eine Bildvorbearbeitungseinheit verfügt, mit der eine Umrißlinie und innerhalb der Umrißlinie Tiefendaten der Objektaufnahmebilder bestimmbar sind. Dabei ist zweckmäßigerweise vorgesehen, daß die Tiefendaten Disparitätswerte sind und mit dem Trennlinienbestimmungsglied die oder jene Trennlinie als Linie maximaler Disparitäten eines Objektaufnahmebildes bestimmbar ist.

Zur Rekonstruktion der ursprünglichen Objektaufnahmebilder ist es zweckmäßig, daß die Synthesebildgeneriereinrichtung eine Aufnahmebildsyntheseeinheit aufweist, mit der aus dem Gesamtbild und dem Sekundärbild unter rekursiver Trennung der Aufnahmbildsegmente die Objektaufnahmebilder rekonstruktierbar sind.

Zur weiteren Reduktion der Objektbilddaten ist es zweckmäßig, eine Datenwandlereinrichtung mit einer Kodiereinheit und einer Dekodiereinheit zur datenreduzierenden Kodierung und Dekodierung wenigstens der Daten des Gesamtbildes und der Lage der oder jeder Trennlinie vorzusehen.

Weitere zweckmäßige Ausgestaltungen und Vorteile der Erfindung sind Gegenstand der Unteransprüche sowie der nachfolgenden Beschreibung von Ausführungsbeispielen der Erfindung unter Bezug auf die Figuren der Zeichnung. Es zeigen:
- Fig. 1: ein Blockschaubild eines Ausführungsbeispieles einer Vorrichtung gemäß der Erfindung,
- Fig. 2 und 3: in Blockschaltbildern den Aufbau einer Bildaufarbeitungseinheit der Vorrichtung gemäß Fig. 1,
- Fig. 4: in einer schematischen Darstellung die Erzeugung eines Gesamtbildes mittels der Bildaufarbeitungseinheit gemäß Fig. 2 und Fig. 3,
- Fig. 5: in einem Blockschaltbild den Aufbau einer Syntheseeinheit der Vorrichtung gemäß Fig. 1 und
- Fig. 6: in einem Blockschaltbild den Aufbau einer Rekonstruktionssyntheseeinheit der Vorrichtung gemäß Fig. 1.

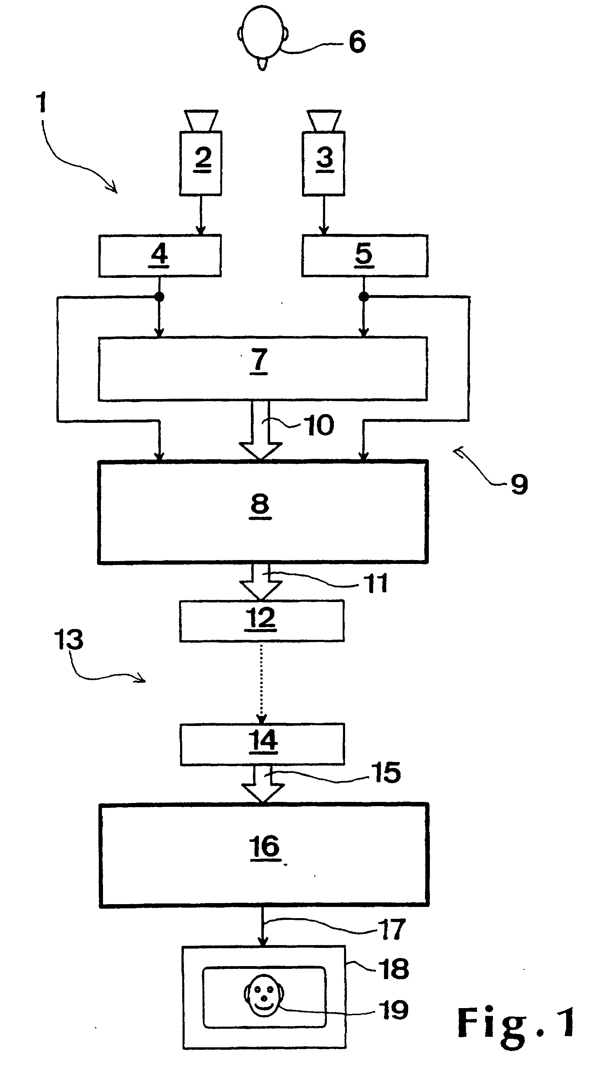

Fig. 1 zeigt in einem Blockschaubild ein Ausführungsbeispiel einer erfindungsgemäßen Vorrichtung zur ansichtsadaptierbaren Synthese von Objektbildern. Die Vorrichtung gemäß Fig. 1 verfügt über eine Bildaufnahmeeinrichtung 1, die bei dem dargestellten Ausführungsbeispiel eine erste Bildaufnahmeeinheit 2 und eine zweite Bildaufnahmeeinheit 3 aufweist. Die Bildaufnahmeeinheiten 2, 3 sind beispielsweise als Videokameras ausgeführt. Die erste Bildaufnahmeeinheit 2 ist an eine erste Aufnahmespeichereinheit 4 angeschlossen, in der von der ersten Bildaufnahmeeinheit 2 aufgenommene Objektaufnahmebilder abspeicherbar sind. Entsprechend ist die zweite Bildaufnahmeeinheit 3 an eine zweite Aufnahmespeichereinheit 5 angeschlossen, in der die von ihr aufgenommenen Objektaufnahmebilder abspeicherbar sind.

In der Darstellung gemäß Fig. 1 sind die Bildaufnahmeeinheiten 2, 3 horizontal nebeneinander angeordnet und parallel zueinander ausgerichtet, so daß ein Objekt 6, beispielsweise ein menschlicher Kopf, unter verschiedenen Aufnahmeansichten aufnehmbar und in jeder Aufnahmespeichereinheit 4, 5 bei einer Anordnung des Objektes 6 zwischen den Bildaufnahmeeinheiten 2, 3 ein Linksbild als erstes Objektaufnahmebild beziehungsweise ein Rechtsbild als zweites Objektaufnahmebild abspeicherbar sind.

Die Aufnahmespeichereinheiten 4, 5 sind zum einen an eine Bildvorverarbeitungseinheit 7 und zum anderen an eine Bildaufarbeitungseinheit 8 einer Bilddatenverarbeitungseinrichtung 9 angeschlossen. Mit der Bildvorverarbeitungseinheit 7 sind in an sich bekannter Weise für jedes Objektaufnahmebild Objektumrißlinien des Objektes 6 zum Herauslösen des Objektes 6 aus einem Hintergrund und Disparitäten von Objektbildpunkten eines Objektaufnahmebildes im Vergleich zu den jeweils gleichen Objektpunkten auf dem Objekt 6 zugeordneten Objektbildpunkten des mittels der anderen Bildaufnahmeeinheit 2, 3 aufgenommenen Objektaufnahmebildes bestimmbar. Die den Umrißlinien des Objektes 6 und den Disparitäten zugeordneten Daten sind von der Bildvorverarbeitungseinheit 7 über eine Bildverarbeitungsbusleitung 10 der Bildaufarbeitungseinheit 8 einspeisbar.

Die Bildaufarbeitungseinheit 8 ist über eine Bilddatenausgabebusleitung 11 an eine Kodiereinheit 12 einer Datenwandlereinrichtung 13 angeschlossen, mit der die Daten unter Datenreduktion beispielsweise vor einer durch eine gepunktete Linie dargestellten Zwischenspeicherung oder Datenübertragung an eine Dekodiereinheit 14 kodierbar sind. Mit der Dekodiereinheit 14 der Datenwandlereinrichtung 13 sind die ihr eingespeisten Daten dekodierbar und über eine Synthesebildbusleitung 15 einer Synthesebildgeneriereinrichtung 16 einspeisbar. Mittels der Synthesebildgeneriereinrichtung 16 gewonnene Synthesebilder sind über eine Synthesebilddatenleitung 17 an eine Ausgabeeinheit 18 weiterleitbar, mit der die Daten als Synthesebilder 19 des Objektes 6 ausgebbar sind.

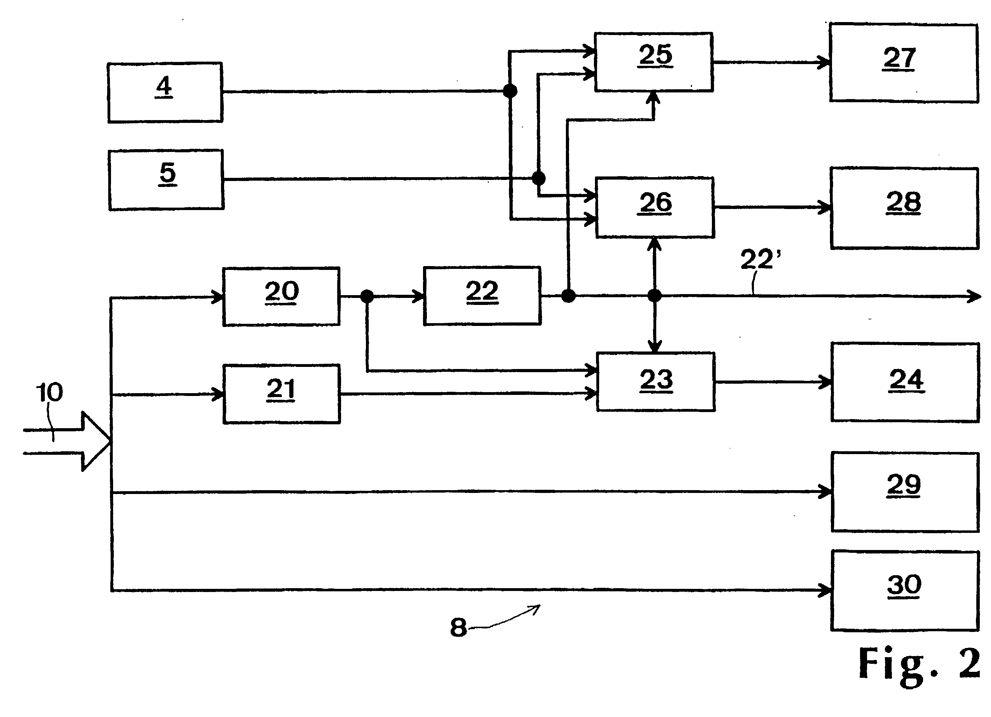

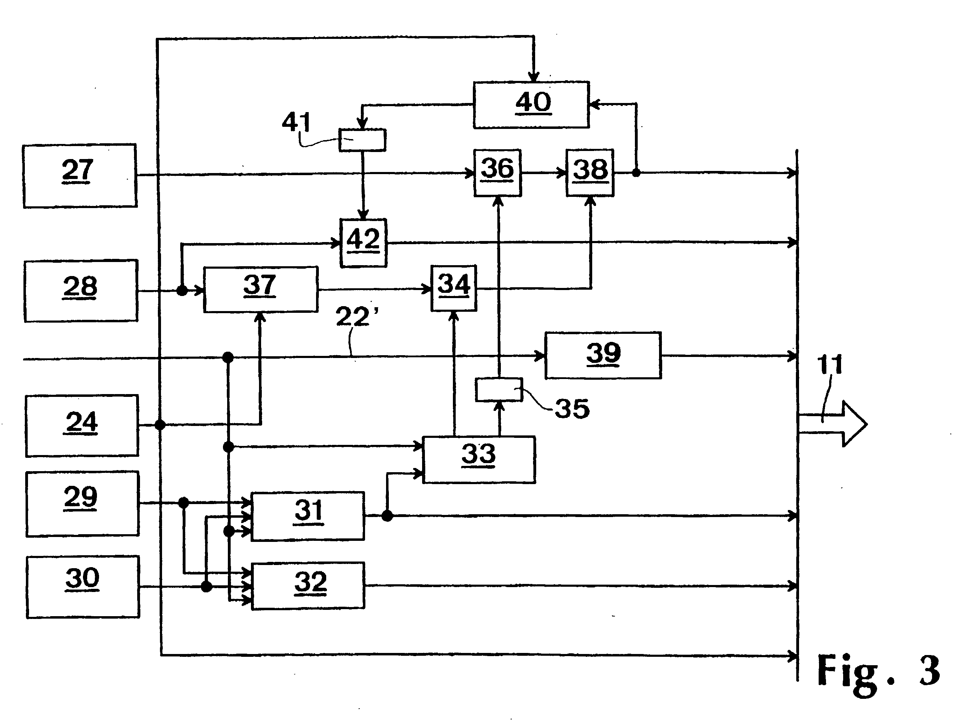

Fig. 2 und Fig. 3 zeigen in Blockschaltbildern den Aufbau der Bildaufarbeitungseinheit 8 der Vorrichtung gemäß Fig. 1. Aus Fig. 2 ist ersichtlich, daß über die Bildverarbeitungsbusleitung 10 die Disparitäten des mit der ersten Bildaufnahmeeinheit 2 aufgenommenen ersten Objektaufnahmebildes in bezug auf das zweite Objektaufnahmebild in einem ersten Disparitätsbildspeicher 20 und die Disparitäten des mit der zweiten Bildaufnahmeeinheit 3 aufgenommenen zweiten Objektaufnahmebildes in bezug auf das erste Objektaufnahmebild in einem zweiten Disparitätsbildspeicher 21 abspeicherbar sind. Dem ersten Disparitätsbildspeicher 20 ist ein Trennlinienbestimmungsglied 22 nachgeordnet, mit dem eine das erste Objektaufnahmebild in zwei Aufnahmebildsegmente trennende Trennlinie bestimmbar ist, die beispielsweise entlang der zeilenweise jeweils größten Disparität von Objektbildpunkten des ersten Objektaufnahmebildes verläuft. Die Ausgangsdaten des Trennlinienbestimmungsgliedes 22 sind in eine Trennliniendatenleitung 22' einspeisbar. Weiterhin sind die Disparitätsbildspeicher 20, 21 an einen an die Trennliniendatenleitung 22' gelegten Disparitätsmultiplexer 23 angeschlossen, dem ein Gesamtdisparitätsbildspeicher 24 zum kompakten Abspeichern der Disparitäten der Objektaufnahmebilder als Gesamtdisparitätenbild nachgeordnet ist.

Die erste Aufnahmespeichereinheit 4 und die zweite Aufnahmespeichereinheit 5 sind jeweils an einen ersten Aufnahmespeichermultiplexer 25 und einen zweiten Aufnahmespeichermultiplexer 26 einer Aufnahmebildsegmentmischeinheit angeschlossen, wobei die Aufnahmespeichermultiplexer 25, 26 eingangsseitig mit der Trennliniendatenleitung 22' in Verbindung stehen. Mit dem ersten Aufnahmespeichermultiplexer 25 ist ein Primärbild generierbar, das sich aus Aufnahmebildsegmenten der Objektaufnahmebilder mit der größeren Ortsauflösung zusammensetzt, die entlang der Trennlinie zusammengefügt sind. Mit dem zweiten Aufnahmespeichermultiplexer 26 sind die jeweils anderen Aufnahmebildsegmente der Objektaufnahmebilder mit geringerer Ortsauflösung entlang der Trennlinie zu einem Sekundärbild zusammenfügbar. Das Primärbild ist in einem Primärbildspeicher 27, und das Sekundärbild ist in einem Sekundärbildspeicher 28 abspeicherbar.

Weiterhin sind die über die Bildverarbeitungsbusleitung 10 eingespeisten Objektumrißlinien der Objektaufnahmebilder in einem ersten Objektumußlinienspeicher 29 und einem zweiten Objektumrißlinienspeicher 30 abspeicherbar.

Mit Bezug auf Fig. 3 ist ersichtlich, daß die Bildaufarbeitungseinheit 8 über ein Primärbildumrißbestimmungsglied 31 und ein Sekundärbildumrißbestimmungsglied 32 verfügt, die jeweils an die Trennliniendatenleitung 22' sowie die Objektumrißspeicher 29, 30 angeschlossen sind. Mit dem Primärbildumrißbestimmungsglied 31 ist unter Berücksichtigung der Lage der Trennlinie aus den in den Objektumrißspeichern 29, 30 abgelegten Objektaufnahmebildern der Umriß des Primärbildes bestimmbar und neben einer Ausgabe in die Bilddatenausgabebusleitung 11 einem Gewichtungsbestimmungsglied 33 einspeisbar. Entsprechend ist mit dem Sekundärbildumrißbestimmungsglied 32 unter Berücksichtigung der Lage der Trennlinie der Umriß des Sekundärbildes bestimmbar und über die Bilddatenausgabebusleitung 11 ausgebbar.

Mit dem Gewichtungsbestimmungsglied 33 sind Gewichtungsfaktoren bestimmbar, die ausgehend von der Umrißlinie des Primärbildes von beispielsweise 0% in Richtung der Trennlinie auf beispielsweise 50% zunehmen. Diese Gewichtungsfaktoren sind zum einen einem Sekundärbildgewichtungsglied 34 und zum anderen einem Komplementärgewichtungsbildungsglied 35 einspeisbar, mit dem aus den Differenzen der Gewichtungsfaktoren zu dem Wert 1 ein Komplementärgewichtungsfaktor bildbar ist. Die Komplementärgewichtungsfaktoren sind einem Primärbildgewichtungsglied 36 einspeisbar. Dem Sekundärbildgewichtungsglied 34 ist ein an den Sekundärbildspeicher 28 angeschlossenes Sekundärbildadaptationsglied 37 vorgeschaltet, mit dem das Sekundärbild unter Interpolation von Objektzwischenbildpunkten auf die Größe des Primärbildes vergrößerbar ist. Das auf die Größe des Primärbildes angepaßte Sekundärbild ist von dem Sekundärbildadaptationsglied 37 dem Sekundärbildgewichtungsglied 34 einspeisbar. Mit dem Sekundärbildgewichtungsglied 34 ist jeder Objektbildpunkt des vergrößerten Sekundärbildes mit dem ihm zugeordneten Gewichtungsfaktor multiplizierbar. Entsprechend ist mit dem an den Primärbildspeicher 27 angeschlossenen Primärbildgewichtungsglied 36 jeder Objektbildpunkt des Primärbildes mit dem ihm zugeordneten Komplementärgewichtungswert multiplizierbar.

Das Gewichtungsbestimmungsglied 33, das Sekundärbildgewichtungsglied 34, das Komplementärgewichtungsbildungsglied 35 und Primärbildgewichtungsglied 36 bilden somit eine Gewichtungseinheit, mit der das Primärbild im Bereich nahe der oder jeder Trennlinie geringer als in von der oder jeder Trennlinie weiter entfernten Bereichen und das Sekundärbild im Bereich nahe der oder jeder Trennlinie stärker als in der oder jeder Trennlinie weiter entfernten Bereichen gewichtbar sind.

Weiterhin verfügt die Bildaufarbeitungseinheit 8 über ein mit dem Sekundärbildgewichtungsglied 34 und dem Primärbildgewichtungsglied 36 in Verbindung stehendes Gesamtbildgenerierglied 38, mit dem die Aufnahmebildsegmente des gewichteten Primärbildes und des gewichteten expandierten Sekundärbildes zu einem aus Gesamtbildsegmenten entlang der Trennlinie zusammengesetzten Gesamtbild additiv überlagerbar sind. Die dem Gesamtbild zugeordneten Gesamtbilddaten aus dem Gesamtbildgenerierglied 38 sind der Bilddatenausgabebusleitung 11 zuführbar.

Die Trennliniendatenleitung 22' ist an ein Verschiebebestimmungsglied 39 angeschlossen, mit dem die Verschiebung der Trennlinie gegenüber einer Randseite eines Objektaufnahmebildes bestimmbar ist. Die der Verschiebung zugeordneten Verschiebeparameter sind der Bilddatenausgabebusleitung 11 einspeisbar.

Es ist zweckmäßig, die Gesamtbilddaten einem Disparitätskompensationsglied 40 einzuspeisen, das weiterhin an den Gesamtdisparitätsbildspeicher 24 angeschlossen ist. Mit dem Disparitätskompensationsglied 40 sind die Disparitätswerte des Gesamtdisparitätsbildes unter Berücksichtigung des aus der Gewichtung des Primärbildes und des Sekundärbildes hervorgegangenen Gesamtbildes kompensierbar. Dem Disparitätskompensationsglied 40 ist ein Negationsglied 41 nachgeordnet, mit dem die kompensierten Disparitätswerte mit dem Wert ― 1 multiplizierbar sind. Das Negationsglied 41 ist zusammen mit dem Sekundärbildspeicher 28 an ein Sekundärbildadditionsglied 42 angeschlossen, mit dem Prädiktionsfehler des Sekundärbildes berechenbar und der Bilddatenausgabebusleitung 11 einspeisbar sind.

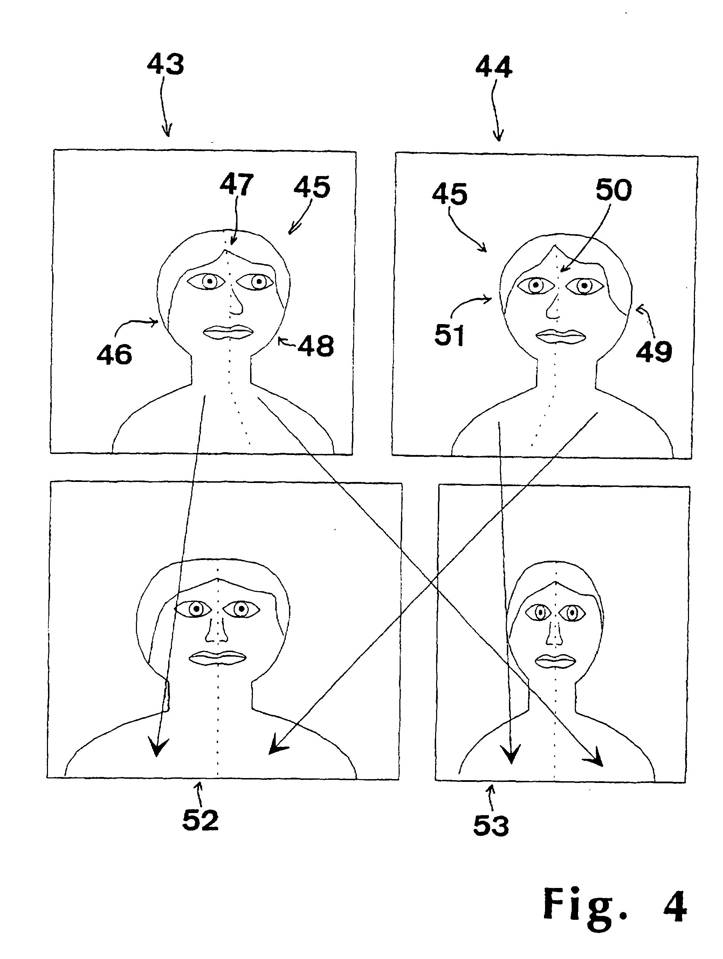

Fig. 4 zeigt in einer schematischen Darstellung anschaulich die Verarbeitung eines linken Objektaufnahmebildes 43 und eines rechten Objektaufnahmebildes 44 eines menschlichen Kopfes 45 als Objekt 6. Bei dem linken Objektaufnahmebild 43 weist ein linkes Aufnahmebildsegment 46 gegenüber einem durch eine aus der Bestimmung der maximalen Disparitätswerte gewonnenen ersten Trennlinie 47 abgegrenzten rechten Aufnahmebildsegment 48 die größere Ortsauflösung auf. Entsprechend weist bei dem rechten Objektaufnahmebild 44 ein rechtes Aufnahmebildsegment 49 gegenüber einem durch eine zweite Trennlinie 50 abgetrennten linken Aufnahmebildsegment 51 die größere Ortsauflösung auf.

Dementsprechend ist, wie durch entsprechende Zuordnungspfeile angedeutet, ein Primärbild 52 mit entsprechender Gewichtung der Objektbildpunkte aus dem linken Aufnahmebildsegment 46 des linken Objektaufnahmebildes 43 und dem rechten Aufnahmebildsegment 49 des rechten Objektaufnahmebildes 44 gebildet. Ein Sekundärbild 53 wiederum ist wie, durch entsprechende Zuordnungspfeile angedeutet, aus dem rechten Aufnahmebildsegment 48 des linken Objektaufnahmebildes 43 und dem linken Aufnahmebildsegment 51 des rechten Objektaufnahmebildes 44 zusammengesetzt. Nach interpolierender Expansion des Sekundärbildes 53 auf die Größe des Primärbildes 52 mittels des Sekundärbildadaptionsgliedes 37 sind das Primärbild 52 und das Sekundärbild 53 unter Gewichtung ihrer Objektbildpunkte mit dem Gesamtbildgenerierglied 38 zu einem Gesamtbild überlagerbar.

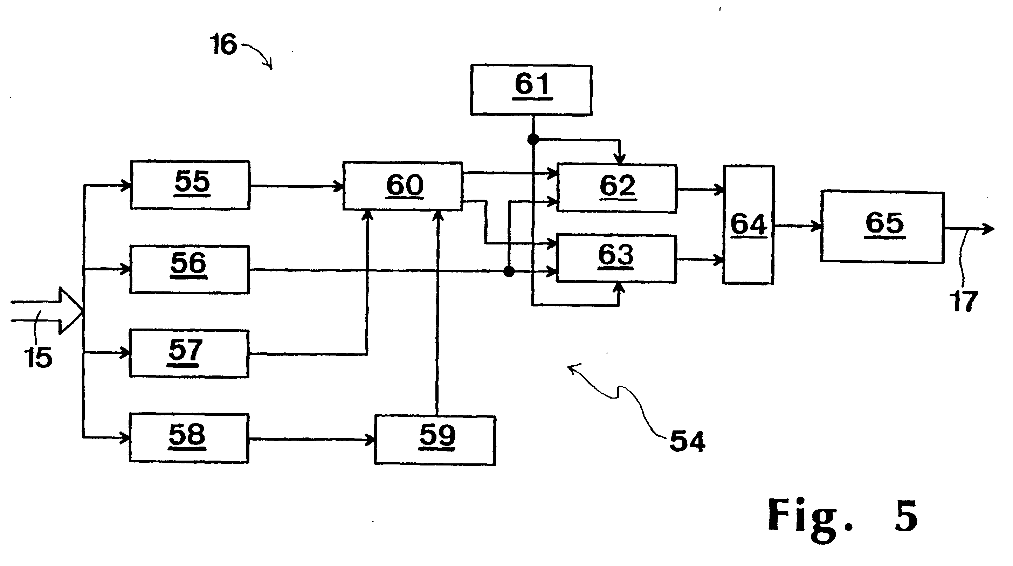

Fig. 5 zeigt in einem Blockschaltbild eine Syntheseeinheit 54 der Synthesebildgeneriereinrichtung 16 gemäß Fig. 1. Die Syntheseeinheit 54 ist an die Synthesebildbusleitung 15 angeschlossen, über die nach einer Dekodierung durch die Dekodiereinheit 14 das Gesamtbild einem Synthesegesamtbildspeicher 55, das Gesamtdisparitätenbild einem Synthesedisparitätenspeicher 56, der Umriß des Gesamtbildes einem Synthesegesamtbildumrißspeicher 57 und die Lage der Trennlinie einem Syntheseverschiebungsspeicher 58 einspeicherbar sind. Der Ausgang des Syntheseverschiebungsspeichers 58 ist an ein Trennlinienrekonstruktionsglied 59 angeschlossen, mittels dem die Lage der Trennlinie in dem Gesamtbild rekonstruierbar ist. Die Ausgänge des Synthesegesamtbildspeichers 55, des Synthesegesamtbildumrißspeichers 57 sowie des Trennlinienrekonstruktionsgliedes 59 sind an einen Erfassungsbereichsdemultiplexer 60 angeschlossen, mit dem das Gesamtbild entlang der Trennlinie in Erfassungsbereichen der Bildaufnahmeeinheiten 2,3 zugeordneten Gesamtbildsegmente aufteilbar ist.

Zum Generieren eines Synthesebildes mit einer von den Aufnahmeansichten verschiedenen Syntheseansicht weist die Syntheseeinheit 54 einen Syntheseansichtgeber 61 auf, mit dem einem ersten Projektionsglied 62 und einem zweiten Projektionsglied 63 eine Syntheseansicht S einspeisbar sind. Weiterhin ist den Projektionsgliedern 62, 63 das in dem Synthesedisparitätenspeicher 56 abgespeicherte Gesamtdisparitätsbild einspeisbar. Dem ersten Projektionsglied 62 ist eines der Aufnahmebildsegmente und dem zweiten Projektionsglied 63 das andere Gesamtbildsegment jeweils aus dem Erfassungsbereichdemultiplexer 60 einspeicherbar.

Mit den Projektionsgliedern 62, 63 ist eine Kontraktion der Gesamtaufnahmebildsegmente des Gesamtbildes zu Synthesebildsegmenten derart durchführbar, daß Synthesebildpunkte entsprechend ihrer zugeordneten Disparitäten und der Syntheseansicht S abgebildet werden. Bei S=0 für die erste Aufnahmeansicht der ersten Bildaufnahmeeinheit 2 sowie S = 1 für die zweite Aufnahmeansicht der zweiten Bildaufnahmeeinheit 3 und einer dazwischenliegenden Syntheseansicht 0<S<1 wird beispielsweise der Objektbildpunkt an der Position n des Objektbildes im ersten Synthesebildsegment an der Position n+d(n)·S und ein Objektbildpunkt in dem zweiten Synthesebildsegment auf die Position n + d(n)·(1 - S) abgebildet, wobei mit d(n) die Disparität an dem Objektbildpunkt n und mit n = 0 die Trennlinie zwischen den Erfassungsbereichen bezeichnet wird. Da die den Aufnahmebildsegmenten 46, 49 des Primärbildes 52 entsprechenden Erfassungsbereiche in der Regel immer verkleinert werden, werden bestimmte Punkte des Objektbildes von bestimmten Syntheseansichten S aus nicht verwendet. Dabei bleibt die Auflösung der Synthesebildsegmente erhalten.

Entsprechend sind auch mit Syntheseansichten S<0 und S>0, das heißt außerhalb von durch Aufnahmeansichten eingeschlossenen Synthesansichtsbereichen, Synthesebilder generierbar, wobei jedoch hierbei die Verzerrungen zunehmen, je weiter sich die Syntheseansichten von den randseitigen Objektansichten entfernen. Grundsätzlich sind natürlich bei dem erläuterten Ausführungsbeispiel gemäß Fig. 1 auch Synthesansichten oberhalb und unterhalb der Objektaufnahmebilder 43, 44 generierbar. Allerdings erfolgt dann die Generierung der rechtwinklig zu den Objektaufnahmebildern 42, 43 versetzten Synthesansichten S nicht ausschließlich zeilenweise aus dem Gesamtbild.

Die mittels der Projektionsglieder 62, 63 erzeugbaren Synthesebildsegmente sind einem Gesamtsynthesebildgenerierglied 64 einspeisbar, mit dem die Synthesebildsegmente zu einem Gesamtsynthesebild kombinierbar sind. Das gesamte Synthesebild ist aus dem Gesamtsynthesegenerierglied 64 einem Syntheseinterpolationsglied 65 einspeisbar, mit dem insbesondere aufgrund von Diskontinuitäten in dem Gesamtdisparitätsbild auftretende datenlose Bereiche des Gesamtsynthesebildes mittels linearer Interpolation zwischen an die datenlose Bereiche angrenzenden, datenbehafteten Bereichen mit Bildpunktdaten auffüllbar sind. Das nunmehr fertig erstellte Gesamtsynthesebild ist über die Synthesebilddatenleitung 17 der Ausgabeeinheit 18 zuführbar.

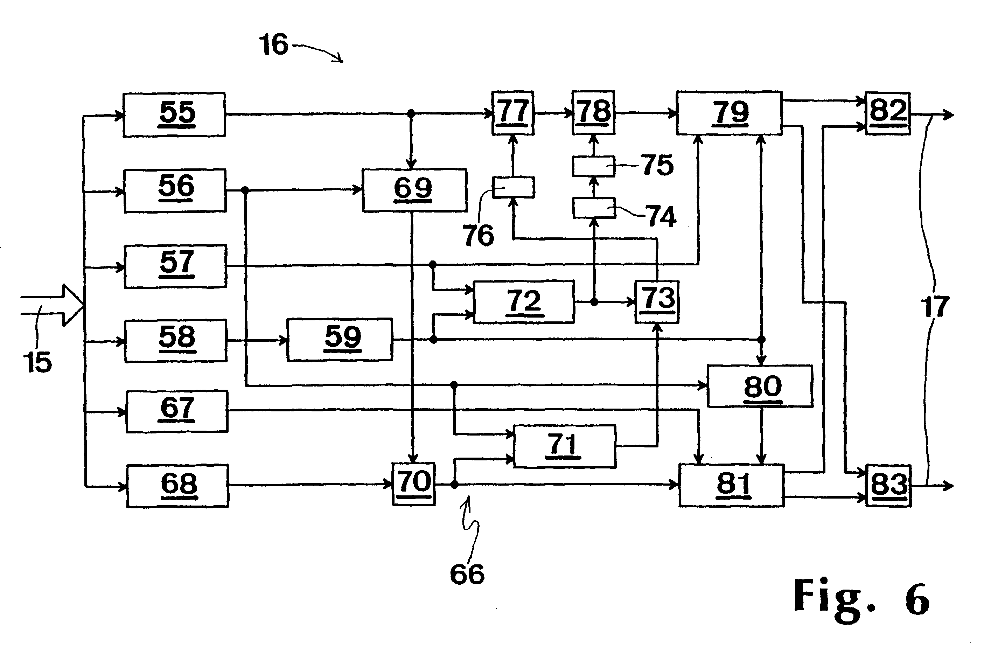

Fig. 6 zeigt in einem Blockschaltbild eine Rekonstruktionssyntheseeinheit 66 der Synthesebildgeneriereinheit 16 gemäß Fig. 1, die zur Rekonstruktion von Synthesegesamtbildern mit den Aufnahmeansichten entsprechenden Syntheseansichten S dient. Neben dem bereits anhand Fig. 5 erläuterten Synthesegesamtbildspeicher 55, dem Synthesedisparitätsbildspeicher 56, dem Synthesegesamtbildumrißspeicher 57, dem Syntheseverschiebungsspeicher 58 sowie dem Trennlinienrekonstruktionsglied 59 ist die Rekonstruktionssyntheseeinheit 66 mit einem Synthesesekundärbildumrißspeicher 67 und einem Synthesesekundärbildspeicher 68 ausgestattet, in denen der Umriß des Sekundärbildes sowie das Sekundärbild selbst auf der Synthesebildbusleitung 15 abspeicherbar sind. Der Synthesegesamtbildspeicher 55 und der Synthesedisparitätsbildspeicher 56 sind an ein Synthesedisparitätskompensationsglied 69 angeschlossen, mit dem Disparitätssprünge in dem Synthesedisparitätsbild ausgleichbar sind sowie das Gesamtbild auf die Größe des Sekundärbildes 53 komprimierbar ist. Die Ausgänge des Synthesesekundärbildspeichers 68 und des Synthesekompensationsglied 69 sind mit einem Additionsglied 70 verbunden, mit dem das kompensierte Synthesedisparitätsbild innerhalb der Umrißlinie des Synthesesekundärbildes aus dem Synthesesekundärbildspeicher 68 projizierbar ist.

An den Ausgang des Additionsgliedes 70 sowie den Ausgang des Synthesedisparitätsbildspeichers 56 ist ein Synthesesekundärbildadaptationsglied 71 angeschlossen, mit dem das Synthesesekundärbild auf die Größe des Synthesegesamtbildes unter Interpolation von Zwischenbereichen expandierbar ist. Der Synthesegesamtbildumrißspeicher 57 und das dem Syntheseverschiebungsspeicher 58 nachgeordnete Trennlinienrekonstruktionsglied 59 sind an ein Gewichtungsbestimmungsglied 72 angeschlossen, mit dem die Gewichtungen der einzelnen Synthesesekundärbildpunkte bestimmbar sind. Mit einem an das Synthesebildadaptationsglied 71 und das Gewichtungsbestimmungsglied 72 angeschlossenen Gewichtungsglied 73 sind die Synthesesekundärbildpunkte mit ihrem zugehörigen Gewichtungsfaktor multiplizierbar.

Weiterhin ist das Gewichtungsbestimmungsglied 72 ausgangsseitig an ein Komplementärgewichtungsbestimmungsglied 74 angeschlossen, mit dem Komplementärgewichtungswerte als Differenz der mittels des Gewichtungsbestimmunggliedes 72 berechneten Gewichtungsfaktoren zu dem Wert 1 bestimmbar sind. Die Komplementärgewichtungswerte sind mit einem dem Komplementärgewichtungsbestimmungsglied 74 nachgeordneten Divisionsglied 75 in Inverskomplementärgewichtungswerte umwandelbar. Dem Gewichtungsglied 73 ist ein Negationsglied 76 nachgeordnet, mit dem die Gewichtungswerte mit dem Wert - 1 multiplizierbar sind.

Der Synthesegesamtbildspeicher 55 ist zusammen mit dem Negationsglied 76 an ein Synthesegesamtbildadditionsglied 77 angeschlossen, mit dem das Synthesegesamtglied um die Beiträge des ursprünglichen Sekundärbildes korrigierbar ist. Dem Synthesegesamtbildadditionsglied 77 ist ein Synthesegesamtbildgewichtungsglied 78 nachgeordnet, das auch an das Divisionsglied 75 angeschlossen ist. Mit dem Synthesegesamtbildgewichtungsglied 78 ist das Synthesegesamtbild um die Gewichtung des Primärbildes bei der Generierung des ursprünglichen Gesamtbildes korrigierbar. Das somit um die Beiträge des ursprünglichen Sekundärbildes und der Gewichtung des ursprünglichen Primärbildes korrigierte Synthesegesamtbild ist einem Syntheseprimärbilddemultiplexer 79 einspeisbar, der weiterhin an den Synthesegesamtbildumrißspeicher 57 sowie das Trennlinienrekonstruktionsglied 59 angeschlossen ist. Mit dem Synthesegesamtbilddemultiplexer 79 ist das Synthesegesamtbild beidseitig der rekonstruierten Trennlinie in die Beiträge aus den verschiedenen Bildaufnahmeeinheiten 2, 3 aufteilbar.

Die Rekonstruktionssyntheseeinheit 66 verfügt weiterhin über ein Synthesesekundärdisparitätskompensationsglied 80, das an den Synthesedisparitätsbildspeicher 56 sowie das Trennlinienrekonstruktionsglied 59 angeschlossen ist. Mit dem Synthesesekundärdisparitätskompensationsglied 80 sind Disparitätssprünge in den dem ursprünglichen Sekundärbild 53 zugeordneten Aufnahmebildsegmenten kompensierbar. Das Additionsglied 70 und das Synthesesekundärdisparitätskompensationsglied 80 sind an einen Synthesesekundärbilddemultiplexer 81 angeschlossen, der weiterhin mit dem Synthesesekundärumrißspeicher 67 in Verbindung steht. Mit dem Synthesesekundärbilddemultiplexer 81 sind die in dem ursprünglichen Sekundärbild 53 zusammengefaßten Aufnahmebildsegmente 48, 51 entlang der zusammenfallenden Trennlinien 47, 50 voneinander separierbar.

Schließlich verfügt die Rekonstruktionssyntheseeinheit 66 über ein erstes Aufnahmebildrekonstruktionsglied 82 und ein zweites Aufnahmebildrekonstruktionsglied 83, die jeweils mit dem Synthesegesamtbilddemultiplexer 79 und dem Synthesesekundärbilddemultiplexer 81 in Verbindung stehen. Mit den Aufnahmebildrekonstruktionsgliedern 82, 83 sind die jeweils einem ursprünglichen Objektaufnahmebild zugeordneten Aufnahmebildsegmente zusammenfügbar und als Rekonstruktionsobjektaufnahmebilder über die Synthesebilddatenleitung 17 an die Ausgabeeinheit 18 übermittelbar.

In nicht dargestellten Ausführungsbeispielen weist die Bildaufnahmeeinrichtung mehr als zwei Bildaufnahmeeinheiten und zugeordnete Aufnahmespeichereinheiten auf, die in Abhängigkeit der Lage der vervorzugten oder wahrscheinlichsten Syntheseansichten angeordnet sind. Liegen die Synthesansichten beispielsweise mit den Objektansichten auf einer Linie, sind die Bildaufnahmeinheiten bevorzugt nebeneinander angeordnet. Das Primärbild wird aus einer der Lage der Objektansichten entsprechenden Abfolge der Aufnahmebildsegmente mit der größeren Ortsauflösung zusammengesetzt, während das Sekundärbild aus den Aufnahmebildsegmenten niedrigerer Ortsauflösung gebildet wird. Entsprechend wird bei einer Anordnung von mehreren Bildaufaufnahmeinheiten beispielsweise sowohl in horizontaler als auch vertikaler Richtung verfahren

## Patentansprüche

1. Vorrichtung zur ansichtsadaptierbaren Synthese von Objektbildern mit einer Bildaufnahmeeinrichtung zum Aufnehmen eines Objektes (6) aus wenigstens zwei Aufnahmeansichten und zur Darstellung in Objektaufnahmebildern, mit einer Bilddatenverarbeitungseinrichtung, mit der die Objektaufnahmebilder zu Objektbilddaten miteinander verknüpfbar sind, und mit einer Synthesebildgeneriereinrichtung, mit der aus den Objektbilddaten Objektsynthesebilder des Objektes (6) aus von den Aufnahmeansichten verschiedenen Syntheseansichten erzeugbar sind, **dadurch gekennzeichnet, daß** die Bilddatenverarbeitungseinrichtung (9) ein Trennlinienbestimmungsglied (22) aufweist, mit dem in jedem Objektaufnahmebild wenigstens eine Trennlinie (47, 50) bestimmbar ist, die jedes Objektaufnahmebild (43, 44) in jeweils einem einer Aufnahmeansicht zugeordneten Erfassungsbereich entsprechende Aufnahmebildsegmente (46, 48, 49, 51) mit höherer und niedrigerer Ortsauflösung unterteilt, daß die Bilddatenverarbeitungseinrichtung (9) über eine Aufnahmebildsegmentmischeinheit (25, 26) verfügt, mit der wenigstens Aufnahmebildsegmente (46, 48, 49, 51) höherer Ortsauflösung entlang der oder jeder Trennlinie (47, 50) zu einem Gesamtbild der Objektbilddaten verknüpfbar sind, und daß die Synthesebildgeneriereinrichtung (16) mit einer Syntheseeinheit (54) ausgestattet ist, mit der aus dem Gesamtbild und der Lage der oder jeder Trennlinie (47, 50) verschiedenen Syntheseansichten zugeordnete Synthesebilder generierbar sind.

2. Vorrichtung nach Anspruch 1, **dadurch gekennzeichnet, daß** mit der Aufnahmebildsegmentmischeinheit (25, 26) die Aufnahmbildsegmente (46, 49) mit einer höheren Ortsauflösung in einer der Anordnung der Aufnahmeansichten zugeordneten gleichen Anordnung zu einem Primärbild (52) als Bestandteil des Gesamtbildes verknüpfbar sind.

3. Vorrichtung nach Anspruch 2, **dadurch gekennzeichnet, daß** mit der Aufnahmebildsegmentmischeinheit (25, 26) die Aufnahmebildsegmente (48, 51) mit einer niedrigeren Ortsauflösung in einer zu der Anordnung von zugeordneten Aufnahmeansichten komplementären Anordnung zu einem Sekundärbild (53) verknüpfbar sind, das mit dem Primärbild (52) zu dem Gesamtbild überlagerbar ist.

4. Vorrichtung nach Anspruch 3, **dadurch gekennzeichnet, daß** jede Bilddatenverarbeitungseinrichtung (9) ein Sekundärbildadaptationsglied (37) aufweist, mit dem das Sekundärbild (53) unter Interpolation von Zwischenbildpunkten auf die Größe des Primärbildes (52) expandierbar ist.

5. Vorrichtung nach Anspruch 4, **dadurch gekennzeichnet, daß** die Bilddatenverarbeitungseinrichtung (9) eine Gewichtungseinheit (33, 34, 35, 36) aufweist, mit der das Primärbild (52) im Bereich nahe der oder jeder Trennlinie (47, 50) geringer als in von der oder jeder Trennlinie (47, 50) weiter entfernten Bereichen und das Sekundärbild (53) im Bereich nahe der oder jeder Trennlinie (47, 50) stärker als in von der oder jeder Trennlinie (47, 50) weiter entfernten Bereichen gewichtbar sind.

6. Vorrichtung nach einem der Ansprüche 1 bis 5, **dadurch gekennzeichnet, daß** die Sekundärbildgeneriereinrichtung (16) über ein Synthesebildinterpolationsglied (65) verfügt, mit dem fehlende Bildpunkte des oder jedes Synthesebildes aus benachbarten Bildpunkten interpolierbar sind.

7. Vorrichtung nach einem der Ansprüche 1 bis 6, **dadurch gekennzeichnet, daß** die Bilddatenverarbeitungseinrichtung (9) über eine Bildvorverarbeitungseinheit (7) verfügt, mit der eine Umrißlinie und innerhalb der Umrißlinie Tiefendaten der Objektaufnahmebilder bestimmbar sind.

8. Vorrichtung nach Anspruch 7, **dadurch gekennzeichnet, daß** die Tiefendaten Disparitätswerte sind.

9. Vorrichtung nach einem der Ansprüche 3 bis 8, **dadurch gekennzeichnet, daß** die Synthesebildgeneriereinrichtung (16) eine Rekonstruktionssyntheseeinheit (65) aufweist, mit der aus dem Gesamtbild und dem Sekundärbild (53) die Objektaufnahmebilder (43, 44) mit den Aufnahmeansichten entsprechenden Syntheseansichten rekonstruierbar sind.

10. Vorrichtung nach einem der Ansprüche 1 bis 9, **dadurch gekennzeichnet, daß** eine Datenwandlereinrichtung (13) mit einer Kodiereinheit (12) und einer Dekodiereinheit (14) zur datenreduzierenden Kodierung und Dekodierung wenigstens der Daten des Gesamtbildes und der Lage der oder jeder Trennlinie (47, 50) vorgesehen ist.

## Claims

1. Device for the view-adaptable synthesis or object images, having an image-recording device for recording an object (6) from at least two recorded views and for displaying in recorded object images, having an image data processing device with which the recorded object images can be linked together to form object image data, and having a synthesis image generating device with which object synthesis images of the object (6) comprising synthesis views different from the recorded views can be generated from the object image data, **characterized in that** the image data processing device (9) has a separating-line-determining member (22) with which it is possible to determine in every recorded object image at least one separating line (47, 50) that subdivides every recorded object image (43, 44) into recorded image segments (46, 48, 49, 51) corresponding in each case to one coverage area assigned to a recorded view with higher and lower spatial resolution, **in that** the image data processing device (9) has a recorded image segment mixing unit (25, 26) with which at least recorded image segments (46, 48, 49, 51) of higher spatial resolution can be linked along the separating line (47, 50) or every separating line (47, 50) to form a total image of the object image data, and **in that** the synthesis image generating device (16) is equipped with a synthesis unit (54) with which synthesis images assigned to various synthesis views can be generated from the total image and the position of the separating line (47, 50) or of every separating line (47, 50).

2. Device according to Claim 1, **characterized in that** the recorded image segments (46, 49) having a higher spatial resolution can be linked by means of the recorded image segment mixing unit (25, 26) in an arrangement identical to the arrangement of the assigned recorded views to form a primary image (52) as a component of the total image.

3. Device according to Claim 2, **characterized in that** the recorded image segments (48, 51) having a lower spatial resolution can be linked by means of the recorded image segment mixing unit (25, 26) in an arrangement complementary to the arrangement of the assigned recorded views to form a secondary image (53) that can be superimposed with the primary image (52) to form a total image.

4. Device according to Claim 3, **characterized in that** every image data processing device (9) has a secondary image adaptation member (37) with which the secondary image (53) can be expanded to the size of the primary image (52) by interpolating intermediate pixels.

5. Device according to Claim 4, **characterized in that** the image data processing device (9) has a weighting unit (33, 34, 35, 36) with which the primary image (52) can be weighted less in the area close to the separating line (47, 50) or every separating line (47, 50) than in the areas further away from the separating line (47, 50) or every separating line (47, 50) and the secondary image (53) can be weighted more strongly in the area close to the separating line (47, 50) or every separating line (47, 50) than in areas further away from the separating line (47, 50) or every separating line (47, 50).

6. Device according to one of Claims 1 to 5, **characterized in that** the secondary image generating device (16) has a synthesis image interpolation member (65) with which missing pixels of the synthesis image or of every synthesis image can be interpolated from adjacent pixels.

7. Device according to one of Claims 1 to 6, **characterized in that** the image data processing device (9) has an image-preprocessing unit (7) with which a contour line can be determined and, within the contour line, depth data of the recorded object images can be determined.

8. Device according to Claim 7, **characterized in that** the depth data are disparity values.

9. Device according to one of Claims 3 to 8, **characterized in that** the synthesis image generating device (16) has a reconstruction synthesis unit (65) with which the recorded object images (43, 44) can be reconstructed with the synthesis views corresponding to the recorded views from the total image and the secondary image (53).

10. Device according to one of Claims 1 to 9, **characterized in that** a data conversion device (13) is provided with a coding unit (12) and a decoding unit (14) for the data-reduced coding and decoding of at least the data of the total image and the position of the separating line (47, 50) or of every separating line (47, 50).

## Revendications

1. Dispositif de synthèse adaptative à la vue, d'images d'objet comprenant :
une installation de prise de vues pour prendre des vues d'un objet (6) à partir d'au moins deux directions de vue et présenter des vues objet,
une installation de traitement de données d'image, qui combine les vues objet aux données d'image objet et une installation générant des images de synthèse à l'aide de laquelle, à partir des données image objet on génère des images de synthèse de l'objet (6) à partir de vues pour réaliser différentes vues de synthèse,
**caractérisé en ce que**
l'installation de traitement de données d'image (9) comporte un élément de détermination des lignes de séparation (22) à l'aide duquel dans chaque vue objet on définit au moins une ligne de séparation (47, 50) subdivisant chaque vue objet (43, 44) en chaque fois une zone de saisie associée à une vue avec des segments de vue correspondants (46, 48, 49, 51) ayant une résolution locale élevée et une résolution locale basse, l'installation de traitement de données d'image (9) comporte une unité de mélange de segments de vue (25, 26) qui combine au moins des segments de vue (46, 48, 49, 51) de résolution locale élevée le long de la ou de chaque ligne de séparation (47, 50) pour former une image globale des données d'image objet, et
l'installation générant l'image de synthèse (16) est munie d'une unité de synthèse (54) qui génère des images de synthèse associées à différentes vues de synthèse, à partir de l'image globale et de la position de la ou de chaque ligne de séparation (47, 50).

2. Dispositif selon la revendication 1,
**caractérisé en ce que**
l'unité de mélange de segments de vue (25, 26) combine les segments de vue (46, 49) de résolution locale élevée dans une disposition identique et associée aux vues pour former une image primaire (52) faisant partie de l'image globale.

3. Dispositif selon la revendication 2,
**caractérisé en ce que**
l'unité de mélange de segments de vue (25, 26) combine les segments de vue (48, 51) à résolution faible dans une disposition complémentaire à la disposition des vues associées, pour former une image secondaire (53) destinée à être superposée à l'image primaire (52) pour former l'image globale.

4. Dispositif selon la revendication 3,
**caractérisé en ce que**
chaque installation de traitement de données d'image (9) comporte un élément d'adaptation secondaire (37) pour agrandir l'image secondaire (53) avec interpolation de points image intermédiaires à la dimension de l'image primaire (52).

5. Dispositif selon la revendication 4,
**caractérisé en ce que**
l'installation de traitement de données d'image (9) comporte une unité de pondération (33, 34, 35, 36) à l'aide de laquelle l'image primaire (52) sera pondérée dans la zone proche de la ou de chaque ligne de séparation (47, 50) plus faiblement que dans des zones plus éloignées de la ou des lignes de séparation (47, 50), et l'image secondaire (53) sera plus fortement pondérée dans la zone proche de la ou de chaque ligne de séparation (47, 50) que dans les zones plus éloignées de la ou de chaque ligne de séparation (47, 50).

6. Dispositif selon l'une quelconque des revendications 1 à 5,
**caractérisé en ce que**
l'installation générant l'image secondaire (16) comporte un élément d'interpolation de synthèse (65) permettant d'interpoler à partir de points image voisins, les points image manquants dans la ou chaque image de synthèse.

7. Dispositif selon l'une quelconque des revendications 1 à 6,
**caractérisé en ce que**
l'installation de traitement de données d'image (9) dispose d'une unité de prétraitement d'image (7) qui permet de définir une ligne de contour et à l'intérieur de celle-ci, des données de profondeur des vues objet.

8. Dispositif selon la revendication 7,
**caractérisé en ce que**
les données de profondeur sont des valeurs de disparités.

9. Dispositif selon l'une quelconque des revendications 3 à 8,
**caractérisé en ce que**
l'installation générant l'image de synthèse (16) comporte une unité de synthèse de reconstruction (65) à l'aide de laquelle on reconstruit des vues objet (43, 44) avec des vues de synthèse correspondant aux vues à partir de l'image globale et de l'image secondaire (53).

10. Dispositif selon l'une quelconque des revendications 1 à 9,
**caractérisé par**
une installation de conversion de données (13) comprenant une unité de codage (12) ainsi qu'une unité de décodage (14), pour le codage et le décodage réduisant les données, au moins de l'image globale et de la position de chaque ligne de séparation (47, 50).
